# EUROPÄISCHE PATENTANMELDUNG

(11) **EP 4 817 775 A1**
(43) Veröffentlichungstag der Anmeldung: **07.10.2026**
(21) Anmeldenummer: 26165585.6
(22) Anmeldetag: 17.03.2026
(51) Int. Cl.: B23F 5/04, B23F 23/12, B24B 53/075

(54) **VERFAHREN ZUM ABRICHTEN EINER MEHRGÄNGIGEN SCHLEIFSCHNECKE MIT EINER MEHRRILLIGEN ABRICHTROLLE UND VERFAHREN ZUM SCHLEIFEN EINES ZAHNRADS MITTELS EINER MEHRGÄNGIGEN SCHLEIFSCHNECKE**

(30) Priorität: 28.03.2025 DE 102025112302
(71) Anmelder: Kapp Niles GmbH & Co. KG, 96450 Coburg (DE); Volkswagen Aktiengesellschaft, 38440 Wolfsburg (DE)
(72) Erfinder: MÜLLER, Frank, 96484 Meeder (DE); DUHRE, Patrick, 96450 Coburg (DE); KINDSVATER, Maxim, 38440 Wolfsburg (DE); RADEV, Todor, 38440 Wolfsburg (DE); HAMMERSCHLAG, Stefan, 38440 Wolfsburg (DE); LÜHRS, Georg-Friedrich, 38440 Wolfsburg (DE)
(74) Vertreter: Gosdin, Carstensen & Partner Patentanwälte Partnerschaftgesellschaft mbB

(57) **Zusammenfassung**

Die Erfindung betrifft ein Verfahren zum Abrichten einer mehrgängigen Schleifschnecke (1) mit einer mehrrilligen Abrichtrolle (2), wobei die Schleifschnecke (1) mehrere Schneckengänge (3, 4, 5) aufweist, die um eine Werkzeugachse (A) herum parallel zueinander verlaufen, wobei die Abrichtrolle (2) eine Anzahl (n) Abrichtflächen (6, 7, 8) aufweist, die entlang einer Abrichtwerkzeugachse (a) benachbart angeordnet sind und die im Radialschnitt zahnförmig ausgebildet sind, wobei zum Abrichten der Schleifschnecke (1) die Abrichtrolle (2) in Eingriff mit den Schneckengängen (3, 4, 5) gebracht wird. Um im Falle von inäquidistanten Verzahnungen den Abrichtvorgang mit einer entsprechend inäquidistant gestalteten Abrichtrolle korrekt bewerkstelligen zu können, sieht das vorgeschlagene Verfahren vor, dass die Abrichtrolle mehrmals in benachbarte Schneckengänge versetzt eingeführt, dort zentriert und radial zugestellt wird, bis der tiefste Zustellungsbetrag erreicht ist, der auf die richtige Relativlage zwischen Abrichtrolle und Schleifschnecke schließen lässt. Analoges gilt für das Verfahren zum Schleifen eines Zahnrads mit einer inäquidistanten Verzahnung mittels einer mehrgängigen Schleifschnecke.

## Beschreibung

Die Erfindung betrifft ein Verfahren zum Abrichten einer mehrgängigen Schleifschnecke mit einer mehrrilligen Abrichtrolle, wobei die Schleifschnecke mehrere Schneckengänge aufweist, die um eine Werkzeugachse herum parallel zueinander verlaufen, wobei die Abrichtrolle eine Anzahl Abrichtflächen aufweist, die entlang einer Abrichtwerkzeugachse benachbart angeordnet sind und die im Radialschnitt zahnförmig ausgebildet sind, wobei zum Abrichten der Schleifschnecke die Abrichtrolle in Eingriff mit den Schneckengängen gebracht wird. Des Weiteren betrifft die Erfindung ein Verfahren zum Schleifen eines Zahnrads mittels einer mehrgängigen Schleifschnecke, wobei die Schleifschnecke mehrere Schneckengänge aufweist, die um eine Werkzeugachse herum parallel zueinander verlaufen, wobei das Zahnrad Zähne aufweist, die entlang des Umfangs des Zahnrads ungleichmäßig voneinander beabstandet sind und/oder sich in ihrer Form voneinander unterscheiden.

Im Betrieb des Zahnrades entstehen zwangsläufig Geräusche, die durch eine hochwertige Hartfeinbearbeitung zwar minimiert werden können, aber sich nie ganz vermeiden lassen. Dabei werden regelmäßige Geräusche (Geräusche mit tonalem Charakter) zumeist als unangenehmer empfunden als Geräusche mit rauschartigem Charakter. Um bei der Geräuschentwicklung einer sich im Betrieb befindlichen Verzahnung die Regelmäßigkeit bei der Geräuschentstehung zu reduzieren, kommt der Einsatz von Zahnrädern mit sogenannter inäquidistanter Verzahnung in Betracht. Zum diesbezüglichen Stand der Technik wird auf die DE 35 33 743 A1 Bezug genommen.

Wegen der nicht gegebenen Äquidistanz der Abstände von Zahn zu Zahn ist die Fertigung einer solchen Verzahnung problematischer, als wenn eine klassische äquidistante Verzahnung vorliegt. Als Hartfeinbearbeitungsverfahren bei der Produktion inäquidistanter Verzahnungen dürfte sich das Profilschleifverfahren anbieten, bei dem Zahnlücke für Zahnlücke geschliffen wird, und zwar für jede Flanke separat, um gewünschte Inäquidistanzen zu erzeugen.

Nachteilig ist hierbei jedoch, dass dieses Verfahren entsprechend zeitintensiv ist und die herzustellenden Zahnräder demgemäß teuer sind.

Zum technologischen Hintergrund des Verzahnungsschleifen sei beispielsweise auf die DE 43 30 930 A1 hingewiesen. Weitere ähnliche und andere Lösungen zeigen die DE 199 10 747 A1**,** die DE 197 20 624 A1**,** die DD 286 530 A5**,** die DE 10 2017 121 344 A1**,** die DE 202 03 661 U1**,** die JP 2000 326 141 A und die DE 100 01 848 A1**.**

Der Erfindung liegt die **Aufgabe** zugrunde, ein Verfahren der eingangs genannten Art so fortzubilden, dass es in wirtschaftlicher Weise und mit hoher Präzision möglich ist, Zahnräder bzw. Werkstücke mit einem zahnrad-ähnlichen Profil herzustellen, die mit einer inäquidistanten Verzahnung bzw. Profilierung versehen sind. Dabei liegt ein besonderes Augenmerk darauf, die Probleme, die sich sowohl beim Abrichten als auch beim Schleifen im Wälzschleifverfahren durch die Inäquidistanz ergeben, durch ein automatisiertes Verfahren zu lösen. Dies betrifft namentlich das Problem, die inäquidistant vorbereitete Abrichtrolle in der richtigen Stellung zum Abrichten in die Schleifschnecke einzufahren. Gleichermaßen gilt es, die entsprechend inäquidistant abgerichtete Schleifschnecke in den richtigen Kontakt mit dem zu schleifenden Werkzeug zu bringen.

Die **Lösung** dieser Aufgabe durch die Erfindung ist bei dem Verfahren zum Abrichten einer mehrgängigen Schleifschnecke mit einer mehrrilligen Abrichtrolle dadurch gekennzeichnet, dass mindestens zwei der Abrichtflächen entlang der Abrichtwerkzeugachse der Abrichtrolle ungleichmäßig voneinander beabstandet sind und/oder dass sich mindestens zwei der Abrichtflächen im Radialschnitt in ihrer Form voneinander unterscheiden, wobei das Abrichten der Schleifschnecke mit der Abrichtrolle die Schritte umfasst:
a) Ermittlung oder Feststellung des Außendurchmessers sowohl der Schleifschnecke als auch der Abrichtrolle;
b) Bei stehender Schleifschnecke:
   b1) radiales Einfahren der Abrichtflächen der Abrichtrolle in die Schneckengänge in einer ersten axialen Relativposition zwischen Werkzeugachse und Abrichtwerkzeugachse, wobei das Einfahren so erfolgt, dass die Abrichtflächen bis in einen Bereich zwischen 10 % und 90 % der Höhe der Schneckengänge reichen;
      bla) Ermittlung einer ersten axialen Relativposition zwischen Schleifschnecke und Abrichtrolle bei Kontaktnahme einer Abrichtfläche mit einer ersten Flanke der Schleifschnecke in einem Schneckengang;
      b1b) Ermittlung einer zweiten axialen Relativposition zwischen Schleifschnecke und Abrichtrolle bei Kontaktnahme einer Abrichtfläche mit einer der ersten Flanke gegenüberliegenden zweiten Flanke der Schleifschnecke in einem Schneckengang;
      b1c) Ermittlung einer axialen Mittenposition zwischen der ersten und der zweiten axialen Relativposition gemäß Schritt b1a) und b1b);
      b1d) Positionieren der Abrichtrolle relativ zur Schleifschnecke in der ermittelten axialen Mittenposition des Schneckengangs und weiteres radiales Einfahren der Abrichtrolle in die Schneckengänge, bis Kontaktnahme einer Abrichtfläche mit der Schleifschnecke detektiert wird;
      b1e) Speichern der gemäß Schritt b1d) ermittelten radialen Position zwischen Abrichtrolle und Schleifschnecke bei Kontaktaufnahme gemäß Schritt b1d);
   b2) Wiederholen des Schritts b1) durch radiales Einfahren der Abrichtrolle in weitere Schneckengänge, wobei das Einfahren in Richtung der Werkzeugachse um einen Schneckengang versetzt erfolgt, wobei die Anzahl der Wiederholungen der Anzahl Abrichtflächen minus 1 entspricht;
c) Abrichten der Schleifschnecke mit der Abrichtrolle, wobei die Abrichtrolle in derjenigen relativen axialen Mittenposition gemäß Schritt b1c) zwischen Schleifschnecke und Abrichtrolle eingefahren wird, bei der sich die tiefste radiale Position zwischen Schleifschnecke und Abrichtrolle gemäß Schritt b1e) ergeben hat.

Die Ermittlung oder die Feststellung des Außendurchmessers der Schleifschnecke und/oder der Abrichtrolle gemäß obigem Schritt a) erfolgt bevorzugt durch Antasten des Außenumfangs der Schleifschnecke und/oder der Abrichtrolle mittels eines Messelements, insbesondere mittels eines Körperschallsensors. Der Körperschallsensor, der als solcher im Stand der Technik hinlänglich bekannt ist, ist in einem Bauteil (z. B. in der Werkzeugspindel) verbaut; sobald Kontakt zu einem anderen Bauteil entsteht, steigt die Amplitude des Signals, woraus auf Kontakt geschlossen werden kann.

Allerdings ist bei der genannten Ermittlung bzw. Feststellung des Außendurchmessers auch daran gedacht, hier zumindest teilweise lediglich bereits bestehende Daten heranzuziehen, die ohnehin vorhanden sind. Der Außendurchmesser der zum Einsatz kommenden Abrichtrolle ist zumeist bekannt. Da auch der Abstand zwischen der Werkzeugachse (Achse der Schleifschnecke) und der Abrichtwerkzeugachse bekannt ist, reicht also ein Antasten der Abrichtrolle am Außendurchmesser der Schleifschnecke, um den Außendurchmesser der Schnecke zu bestimmen bzw. zu berechnen.

Beim Wiederholen des obigen Schritts b1) gemäß Schritt b2) werden bevorzugt unterschiedliche Umfangsbereiche und/oder axiale Bereiche der Schleifschnecke verwendet werden. Damit kann vermieden werden, dass die Schleifschnecke durch das beschriebene Verfahren beschädigt wird.

Bei der Ermittlung der ersten und der zweiten axialen Relativposition zwischen Schleifschnecke und Abrichtrolle gemäß obigem Schritt b1a) und b1b) kann die Werkzeugachse und die Abrichtwerkzeugachse relativ zueinander axial verschoben werden.

Eine Alternative hierzu sieht vor, dass bei der Ermittlung der ersten und der zweiten Relativposition zwischen Schleifschnecke und Abrichtrolle gemäß obigem Schritt b1a) und b1b) die Werkzeugachse und die Abrichtwerkzeugachse relativ zueinander ortsfest verbleiben und die Schleifschnecke um die Werkzeugachse gedreht wird, wobei der Wert der axialen Verschiebung aus dem Drehwinkel der Schleifschnecke und der Steigung der Schneckengänge ermittelt wird.

In diesem Zusammenhang sei angemerkt, dass es aufgrund der bekannten Basisgeometrie der Schleifschnecke und namentlich durch die bekannte Steigung, mit der sich die Schneckengänge um die Werkzeugachse winden, der Maschinensteuerung möglich ist, aus dem Drehwinkel der Schleifschnecke auf korrespondierende axiale Verschiebungen zu schließen.

Bei der Durchführung von obigem Schritt b) rotiert die Abrichtrolle (2) bevorzugt.

Die Ermittlung der Kontaktnahme gemäß den obigen Schritten b1a), b1b) und b1d) erfolgt bevorzugt durch Antasten mittels eines Messelements, insbesondere mittels eines Körperschallsensors. Generell gilt, dass natürlich auch andere Möglichkeiten bestehen, um die in Rede stehende Kontaktaufnahme zu detektieren. Eine Möglichkeit besteht beispielsweise darin, die Berührung dadurch zu erkennen, dass die Stromaufnahme eines Vorschubmotors beobachtet wird; sobald Kontakt zu einem anderen Bauteil vorliegt, steigt der aufgenommene Strom an, woraus auf Kontakt geschlossen werden kann (die Berührung wird also kraftgesteuert detektiert).

Das Verfahren zum Schleifen eines Zahnrads mittels einer mehrgängigen Schleifschnecke sieht erfindungsgemäß vor, dass korrespondierend zu den Zähnen des Zahnrads mindestens zwei der Schneckengänge entlang der Werkzeugachse ungleichmäßig voneinander beabstandet sind und/oder dass sich mindestens zwei der Schneckengänge im Radialschnitt in ihrer Form voneinander unterscheiden, wobei das Schleifen des Zahnrads mit der Schleifschnecke die Schritte umfasst:
a) Ermittlung des Außendurchmessers sowohl der Schleifschnecke als auch des zu schleifenden Zahnrads;
b) Bei sich drehender Schleifschnecke und sich korrespondierend drehendem Zahnrad:
   b1) radiales Einfahren der Schneckengänge der Schleifschnecke in die Verzahnung des Zahnrads in einer ersten axialen Relativposition zwischen den Achsen von Zahnrad und Schleifschnecke, wobei das Einfahren so erfolgt, dass die Schneckengänge bis in einen Bereich zwischen 10 % und 90 % der Zahnhöhe der Verzahnung reichen;
      b1a) Ermittlung einer ersten axialen Relativposition zwischen den Achsen von Zahnrad und Schleifschnecke bei Kontaktnahme eines Schneckengangs mit einer ersten Flanke eines Zahns der Verzahnung;
      b1b) Ermittlung einer zweiten axialen Relativposition zwischen den Achsen von Zahnrad und Schleifschnecke bei Kontaktnahme eines Schneckengangs mit einer der ersten Flanke gegenüberliegenden zweiten Flanke eines Zahns der Verzahnung;
      b1c) Ermittlung einer axialen Mittenposition der Zahnlücke zwischen der ersten und der zweiten axialen Relativposition gemäß Schritt b1a) und b1b);
      b1d) Positionieren der Schleifschnecke relativ zum Zahnrad in der ermittelten axialen Mittenposition der Zahnlücke und weiteres radiales Einfahren der Schleifschnecke in die Verzahnung des Zahnrads, bis Kontaktnahme eines Schneckengangs mit dem Zahnrad detektiert wird;
      b1e) Speichern der gemäß Schritt b1d) ermittelten radialen Position zwischen Schleifschnecke und Zahnrad bei Kontaktaufnahme gemäß Schritt b1d);
   b2) Wiederholen des Schritts b1) durch radiales Einfahren der Schleifschnecke in weitere Zahnlücken der Verzahnung, wobei das Einfahren in Umfangsrichtung der Verzahnung um einen Zahn versetzt erfolgt, wobei die Anzahl der Wiederholungen der Anzahl Schneckengänge minus 1 entspricht;
c) Schleifen der Verzahnung des Zahnrads mit der Schleifschnecke, wobei die Schleifschnecke in derjenigen relativen axialen Position zwischen Zahnrad und Schleifschnecke eingefahren wird, bei der sich die tiefste radiale Position zwischen Zahnrad und Schleifschnecke gemäß Schritt b1e) ergeben hat.

Insofern wird auch für das Schleifen des Zahnrades mit der Schleifschnecke analog vorgegangen, wie es oben für das Abrichten der Schleifschnecke mit der mehrrilligen Abrichtrolle beschrieben wurde.

Die Ermittlung des Außendurchmessers der Schleifschnecke und/oder des Zahnrads gemäß obigem Schritt a) erfolgt wiederum bevorzugt durch Antasten des Außenumfangs der Schleifschnecke und/oder des Zahnrads mittels eines Messelements, insbesondere mittels eines Körperschallsensors. Allerdings ist bei der genannten Ermittlung des Außendurchmessers auch natürlich wiederum daran gedacht, hier lediglich bereits bestehende Daten heranzuziehen, die ohnehin vorhanden sind. Dies gilt im vorliegenden Falle insbesondere für den Außendurchmesser der Schleifschnecke. Zumeist sind natürlich auch bereits Daten betreffend den Außendurchmesser des zu schleifenden Zahnrads vorhanden, auf die dann (also ohne jeglichen Messvorgang) zurückgegriffen werden kann. Somit liegen dann die Informationen vor, so dass die Maschinensteuerung im weiteren Verlauf prüfen kann, ob die Gänge der Schleifschnecke in die Verzahnung "eintauchen".

Beim Wiederholen des obigen Schritts b1) gemäß Schritt b2) werden wiederum bevorzugt unterschiedliche Umfangsbereiche und/oder axiale Bereiche der Verzahnung verwendet. Hierdurch kann eine Beschädigung des Zahnrads vermieden werden. In diesem Falle kann in der Maschinensteuerung über das "elektronische Getriebe" zwischen Werkstückspindel und Werkzeugspindel unter Berücksichtigung der Steigung der Schneckengänge auf die entsprechende Position geschlossen werden.

Bei der Ermittlung der ersten und der zweiten Relativposition zwischen Schleifschnecke und Verzahnung des Zahnrads gemäß obigem Schritt b1a) und b1b) kann die Werkzeugachse relativ zum Zahnrad axial verschoben werden.

Bei der Ermittlung der ersten und der zweiten Relativposition zwischen Zahnrad und Schleifschnecke gemäß obigem Schritt b1a) und b1b) kann alternativ die Werkzeugachse und die Achse des Zahnrads relativ zueinander ortsfest verbleiben und die Schleifschnecke mit einer Zusatzdrehung beaufschlagt werden, wobei der Wert der axialen Verschiebung aus dem Drehwinkel der Schleifschnecke und der Steigung der Schneckengänge ermittelt wird.

Die Ermittlung der Kontaktnahme gemäß den obigen Schritten b1a), b1b) und b1d) erfolgt bevorzugt durch Antasten mittels eines Messelements, insbesondere mittels eines Körperschallsensors. Auch hier ist wieder die Detektion der Kontaktnahme durch Überwachung des Stroms eines Vorschubmotors möglich.

Wird nach dem oben beschriebenen Schleifverfahren (insbesondere eines ersten Werkstücks) ein weiteres, neues Zahnrad geschliffen, ist bevorzugt vorgesehen, dass zum Schleifen desselben mit der Schleifschnecke die Schritte durchgeführt werden:
a) Ermittlung oder Feststellung der Lage der Schneckengänge über der Werkzeugachse (diese Lage ist nach Durchführung des oben beschriebenen Schleifverfahrens bekannt bzw. gespeichert, worauf zurückgegriffen werden kann);
b) vor dem Einfahren der Schleifschnecke in die zu schleifende Verzahnung: Ermittlung der Lage der Zähne und/oder der Zahnlücken des Zahnrads über den Umfang des Zahnrads;
c) Auswerten der ermittelten Lage der Zähne und/oder der Zahnlücken gemäß Schritt b) und Bestimmung sich wiederholender Abstandsmuster über den Umfang des Zahnrads;
d) Einfahren der Schleifschnecke in die zu schleifende Verzahnung, wobei die in Schritt a) ermittelte Lage der Schneckengänge (3, 4, 5) mit der Lage der Zähne und/oder der Zahnlücken des Zahnrads bezüglich des gemäß Schritt c) bestimmten sich wiederholenden Abstandsmusters abgeglichen wird.

Dabei ist bevorzugt vorgesehen, dass beim Einfahren der Schleifschnecke in die zu schleifende Verzahnung gemäß obigem Schritt d) eine Aufmaßvermittlung anhand der in obigem Schritt b) ermittelten Lage der Zähne und/oder der Zahnlücken des Zahnrads durchgeführt wird. Die Aufmaßvermittlung beim Verzahnungsschleifen als solche ist im Stand der Technik hinlänglich bekannt, wozu beispielsweise auf die EP 2 583 779 A1 Bezug genommen wird. Damit kann ein gleichmäßiger minimaler Abschliffbetrag auf den Zahnflanken des Werkstücks gewährleistet werden.

Die Ermittlung der Lage der Zähne und/oder der Zahnlücken des Zahnrads gemäß obigem Schritt b) erfolgt bevorzugt mittels eines berührungslosen Sensors, insbesondere mit einem induktiv oder kapazitiv arbeitenden Sensor. Allerdings können auch andere Sensoren zum Einsatz kommen, insbesondere taktile Sensoren (Messtaster).

Das Verhältnis der Anzahl der Zähne des Zahnrads und die Anzahl der Schneckengänge der Schleifschnecke muss bei dem in Rede stehenden Verfahren des Schleifens einer inäquidistanten Verzahnung ganzzahlig sein.

Nach einer bevorzugten Ausführungsform der Erfindung ist dabei vorgesehen, dass die zahnförmigen Abrichtflächen der Abrichtrolle an einem Bezugsdurchmesser eine Zahndicke aufweisen, wobei mindestens zwei der Zahndicken unterschiedlich groß sind. Zusätzlich oder alternativ kann vorgesehen sein, dass die zahnförmigen Abrichtflächen der Abrichtrolle an einem Bezugsdurchmesser eine Teilung aufweisen, wobei mindestens zwei der Teilungen unterschiedlich groß sind. Eine weitere zusätzliche oder alternative Ausgestaltung sieht vor, dass die zahnförmigen Abrichtflächen der Abrichtrolle eine maximale radiale Höhe aufweisen, wobei mindestens zwei der Höhen unterschiedlich groß sind. Eine weitere Möglichkeit besteht darin, dass die zahnförmigen Abrichtflächen der Abrichtrolle einen Flankenwinkel aufweisen, wobei mindestens zwei der Flankenwinkel unterschiedlich groß sind.

Bevorzugt sind alle Zahndicken, alle Teilungen, alle Höhen bzw. alle Flankenwinkel der Abrichtrolle unterschiedlich groß.

Die Differenz zwischen der oben genannten größten und kleinsten Zahndicke beträgt bevorzugt mindestens 0,05 mm, besonders bevorzugt mindestens 0,1 mm und insbesondere mindestens 0,2 mm, beträgt. Entsprechend gilt auch für die Teilung, dass die Differenz zwischen größter und kleinster Teilung bevorzugt mindestens 0,05 mm, besonders bevorzugt vorzugsweise mindestens 0,1 mm und insbesondere mindestens 0,2 mm, beträgt.

Die Abrichtflächen der Abrichtrolle weisen bevorzugt einen Diamantbelag auf.

Mit der vorgeschlagenen Vorgehensweise ist es möglich, den Abrichtprozess der Schleifschnecke mittels der Abrichtrolle einwandfrei und automatisiert durchzuführen und zu gewährleisten, dass die Abrichtrolle in der korrekten Position zum Abrichten in die Schneckengänge der Schleifschnecke eingeführt wird.

Gleichermaßen wird es möglich, beim Schleifen einer inäquidistanten Verzahnung automatisiert, schnell und präzise die Schleifschnecke in der korrekten Relativposition in das zu schleifenden Werkstück einzufahren.

Mit dem vorgeschlagenen Verfahren ist es möglich, sowohl die korrekte Position zwischen Abrichtrolle und Schleifschnecke als auch zwischen Schleifschnecke und zu schleifendendem Zahnrad automatisiert aufzufinden.

Es wird eine kontinuierliche Wälzschleifbearbeitung des Zahnrades möglich, was eine schnelle und preisgünstige Fertigung von Zahnrädern mit inäquidistanter Verzahnung erlaubt.

Das beschriebene Verfahren stellt sowohl für das Abrichten als auch für das Schleifen darauf ab, dass die Abrichtrolle in die Schleifschnecke bzw. die Schleifschnecke in die zu schleifenden Verzahnung in derjenigen Position zur Bearbeitung eintaucht, bei der das tiefste Eintauchen der Abrichtrolle in die Schneckengänge der Schleifschnecke bzw. der Schleifschnecke in die zu Schleifen der Verzahnung möglich wurde. Auf diese Weise kann automatisch die korrekte Relativstellung zwischen Abrichtrolle und Schleifschnecke bzw. zwischen Schleifschnecke und Werkstück ermittelt werden, trotz inäquidistanter Ausgestaltung der Abrichtrolle bzw. Schleifschnecke.

Anders ausgedrückt: Um im Falle von inäquidistanten Verzahnungen den Abrichtvorgang mit einer entsprechend inäquidistant gestalteten Abrichtrolle korrekt bewerkstelligen zu können, sieht das vorgeschlagene Verfahren vor, dass die Abrichtrolle mehrmals in benachbarte Schneckengänge versetzt eingeführt, dort zentriert und radial zugestellt wird, bis der tiefstmögliche Zustellungsbetrag erreicht ist, der auf die richtige Relativlage zwischen Abrichtrolle und Schleifschnecke schließen lässt. Analoges gilt für das Verfahren zum Schleifen eines Zahnrads mit einer inäquidistanten Verzahnung mittels einer mehrgängigen Schleifschnecke.

Die beschriebenen Sensoren zur Ermittlung der Durchmesser bzw. des Vorliegens der Kontaktnahme können Körperschallsensoren sein. Allerdings eignen sich grundsätzlich auch andere Sensoren, insbesondere taktile Sensoren bzw. solche, die auf induktivem bzw. kapazitivem Wege arbeiten, oder auch optischen Sensoren. Zu letzteren wird beispielsweise auf die DE 10 2010 055 820 A1**,** auf die EP 2 284 484 A1 und auf die US 4 547 674 Bezug genommen. Wie oben erläutert, kann für die Kontaktaufnahme auch der Strom eines Antriebsmotors einer Achse überwacht und dadurch auf Kontakt geschlossen werden.

Wenn hier von Schleifschnecken gesprochen wird, sind auch ähnliche schneckenförmige Werkzeuge wie beispielsweise Polierschnecken gemeint. Typischerweise haben diese Abrasivkörner, die durch eine keramische Bindung gehalten werden. Aber auch galvanisch gebundene CBN-Schnecken können verwendet werden.

Zwar wurde hier vom Schleifen eines Zahnrades mittels der mehrgängigen Schleifschnecke gesprochen, darunter sind natürlich aber auch selbstverständlich andere Werkstücke mit zahnradförmigem Profil zu verstehen.

In der Zeichnung ist ein Ausführungsbeispiel der Erfindung dargestellt.
- Fig. 1: zeigt den Radialschnitt (bzw. Normalschnitt, d. h. die Achse der Abrichtrolle liegt in der Zeichenebene) durch eine mehrrillige Abrichtrolle, welche zum Abrichten einer mehrgängigen Schleifschnecke vorgesehen ist,
- Fig. 2: zeigt den Radialschnitt durch eine Schleifschnecke, die mit der Abrichtrolle gemäß Figur 1 abgerichtet werden soll,
- Fig. 3: zeigt die Abrichtrolle, die - selber rotierend - bei stehender Schleifschnecke in einer ersten axialen Relativposition zwischen der Achse der Schleifschnecke und der Abrichtwerkzeugachse positioniert wurde, wobei die Abrichtrolle in drei benachbarte Schneckengänge eingefahren und die Abrichtrolle radial auf die Schleifschnecke zubewegt wurde, bis Kontakt zwischen der Schleifschnecke und der Abrichtrolle vorliegt,
- Fig. 4: zeigt die entsprechende Darstellung gemäß Figur 3, wobei jetzt - bei unveränderter radialer Zustellung der Abrichtrolle zur Schleifschnecke - die Abrichtrolle in Richtung der Abrichtwerkzeugachse um einen Verschiebebetrag (Δa) verschoben wurde, bis Kontakt zwischen der Schleifschnecke und der Abrichtrolle vorliegt,
- Fig. 5: zeigt die Schleifschnecke und die Abrichtrolle, wobei die Abrichtrolle relativ zur Schleifschnecke in der axialen Position angeordnet wurde, die genau zwischen den beiden Positionen gemäß Figur 3 und Figur 4 liegt,
- Fig. 6: zeigt die Abrichtrolle in der axialen Position gemäß Figur 5, die radial auf die Schleifschnecke zubewegt wurde, bis Kontakt zwischen der Schleifschnecke und der Abrichtrolle vorliegt, wobei bis zur Kontaktnahme ein radialer Zustellungsbetrag von Δr1 zurückgelegt wurde,
- Fig. 7 bis Fig. 10: zeigen in analoger Darstellung dieselbe Situation wie in den Figuren 4 bis 6, wobei jetzt die Abrichtrolle in Schneckengänge eingefahren wurde, die denjenigen gemäß den Figuren 4 bis 6 (um einen Schneckengang) benachbart sind.

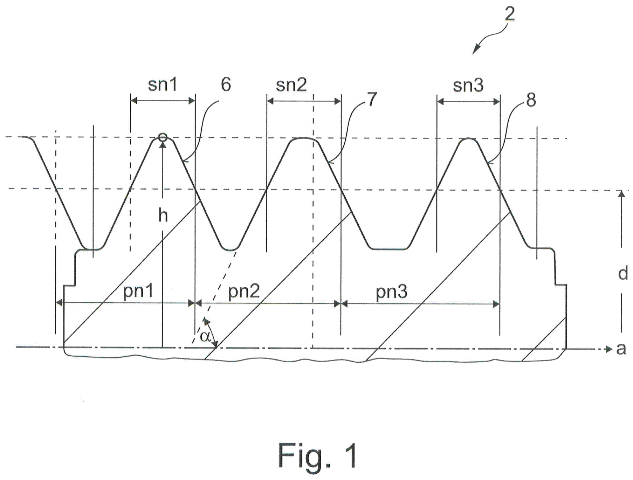

In Figur 1 ist ein Abrichtwerkzeug 2 in Form einer mehrrilligen Abrichtrolle dargestellt (bzw. deren obere Hälfte), welche mehrere Abrichtflächen 6, 7, 8 aufweist, die parallel zueinander zirkulär um die Achse a der Abrichtrolle 2 herum verlaufen. Die Abrichtflächen 6, 7, 8 sind mit Diamant versehen und somit in der Lage, beim Eingreifen in eine abzurichtende Schleifschnecke die einzelnen Gänge der Schleifschnecke mit dem Profil zu versehen, welches durch die Abrichtflächen 6, 7, 8 der Abrichtrolle 2 vorgegeben ist.

Mit der entsprechend abgerichteten Schleifschnecke soll eine Verzahnung im Wälzschleifverfahren hartfeinbearbeitet werden, was im Stand der Technik als solches hinlänglich bekannt ist.

Wesentlich ist, dass die drei Abrichtflächen 6, 7, 8 geometrisch nicht alle gleich ausgebildet sind bzw. entlang der Achse a der Abrichtrolle 2 mit unterschiedlichen bzw. sich verändernden Teilungen angeordnet sind.

Wenn man einen Bezugsdurchmesser d betrachtet (der vorliegend etwa mittig zwischen dem Kopfkreis und dem Fußkreis der dargestellten zahnförmigen Gestaltung liegt), ergeben sich für die Zahndicken jeweilige Werte snl, sn2 bzw. sn3. Für die Zahndicken können jeweils unterschiedliche Werte vorliegen, d. h. im Unterschied zu vorbekannten Lösungen sind in diesem Falle die Zahndicken nicht alle gleich.

Korrespondierend hierzu können auch die Teilungen (d. h. die Abstände von Zahn zu Zahn) pn1, pn2 und pn3 unterschiedlich sein, was im Gegensatz zu vorbekannten Lösungen steht, wo stets angestrebt wird, dass die Teilungen alle gleich sind.

Eingetragen ist auch noch für eine der Abrichtflächen (nämlich für die Abrichtfläche 6) die radiale Höhe h. Im Ausführungsbeispiel sind zwar die radialen Höhen h aller Abrichtflächen 6, 7, 8 gleich groß; allerdings besteht auch insoweit die Möglichkeit, die Höhen unterschiedlich zu gestalten.

Das Gleiche gilt für den Flankenwinkel α der Flanken der Abrichtflächen 6, 7, 8; dieser ist für die Abrichtfläche 7 eingetragen. Auch hier gilt, dass im Ausführungsbeispiel besagte Winkel alle gleich groß sind. Auch diesbezüglich kann allerdings vorgesehen werden, dass unterschiedliche Winkel für die einzelnen Abrichtflächen 6, 7, 8 vorgesehen werden.

Wird mit einer solchen Abrichtrolle eine mehrgängige Schleifschnecke abgerichtet, wird diese so profiliert, dass sich beim späteren Schleifen einer Verzahnung mit der Schleifschnecke analog eine inäquidistante Verzahnung ergibt, d. h. die Zahndicken bzw. Teilungen bzw. andere geometrische Größen sind nicht alle gleich, sondern unterschiedlich.

Zu den oben genannten Größenordnungen der Differenzen zwischen größter und kleinster Zahndicke bzw. zwischen größter und kleinster Teilung sei angemerkt, dass diese dazu führen, dass beim Schleifen einer Verzahnung mit der Schleifschnecke, die mit der Abrichtrolle 2 abgerichtet ist, ein Versatz in der Teilung der Zähne des Zahnrades erreicht wird, der in der Größenordnung von etwa 0,5° liegt. Hieraus ergibt sich dann die Charakteristik der inäquidistanten Verzahnung.

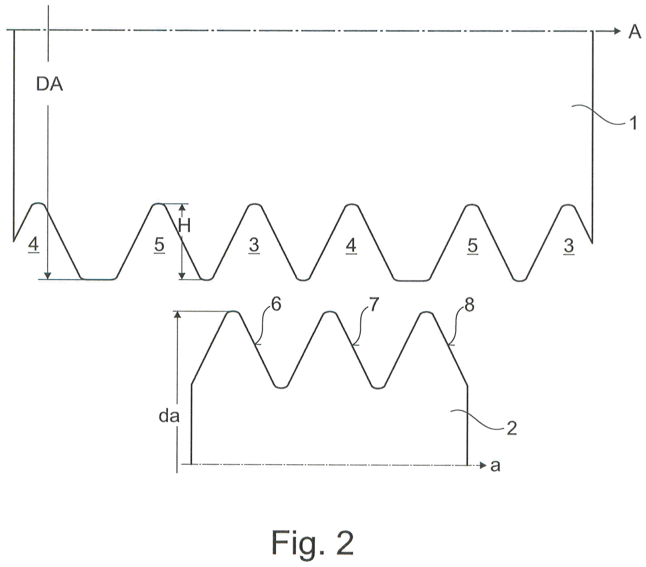

In Figur 2 ist dargestellt, wie eine Schleifschnecke 1, welche um die Werkzeugachse A rotieren kann, mit der Abrichtrolle 2 abgerichtet werden soll. Beim Abrichtvorgang rotiert die Abrichtrolle 2 um die Abrichtwerkzeugachse a. Die Abrichtflächen 6, 7, 8 werden in parallel zueinander verlaufende Schneckengänge 3, 4 und 5 der Schleifschnecke 1 eingeführt und mittels der Abrichtflächen 6, 7, 8 entsprechend profiliert. Das Abrichten einer Schleifschnecke mittels einer mehrgängigen Abrichtrolle ist im Stand der Technik als solches bekannt und muss hier nicht näher beschrieben werden.

Die Schneckengänge 3, 4, 5 erstrecken sich über eine Höhe H. Die Schleifschnecke 1 hat einen Außendurchmesser DA, die Abrichtrolle 2 hat einen Außendurchmesser da.

Die Anzahl der Abrichtflächen 6, 7, 8 ist im Ausführungsbeispiel drei und im Allgemeinen hier mit n angegeben.

Die Anzahl der parallel zueinander verlaufenden Schneckengänge 3, 4, 5 ist im Ausführungsbeispiel ebenfalls drei und im Allgemeinen hier mit N angegeben.

Während bei vorbekannten Lösungen das Einführen der Abrichtrolle 2 in die Schneckengänge 3, 4, 5 normalerweise kein Problem ist, weil alle Abrichtflächen 6, 7, 8 prinzipiell identisch ausgebildet sind, ergeben sich im vorliegenden Falle des Schleifens einer inäquidistanten Verzahnung spezielle Probleme, weil die Abrichtrolle 2 nur in einer speziellen Position zur Schleifschnecke 1 bzw. deren Schneckengängen 3, 4, 5 "passt".

Es geht folglich nachfolgend darum, den Abrichtvorgang korrekt durchzuführen und die Abrichtrolle 2 in der richtigen Relativstellung in die Schneckengänge der Schleifschnecke einzuführen.

Hierzu wird wie folgt vorgegangen.

Zunächst erfolgt die Ermittlung des Außendurchmessers DA der Schleifschnecke 1 und des Außendurchmessers da der Abrichtrolle 2. Diese Daten müssen bekannt sein, damit die (nicht dargestellte) Maschinensteuerung der Schleifmaschine, in der der Abrichtvorgang durchgeführt wird, ermitteln kann, ob beim nachfolgenden Verfahren die Abrichtrolle 2 in die Schneckengänge 3, 4, 5 der Schleifschnecke 1 "eintaucht" oder sich eventuell die radial außenliegenden Bereiche der Abrichtflächen 6, 7, 8 sich den radial außenliegenden Bereichen der Schneckengänge 3, 4, 5 gegenüber liegen und so das "Eintauchen" nicht möglich ist. In diesem Falle wird die ansonsten stehende (nicht rotierende) Schleifschnecke 1 um einen vorgegebenen Drehwinkel (z. B. 30° oder 45°) um die Werkzeugachse A gedreht, bis das besagte Eintauchen möglich ist.

Ein nicht dargestellter Körperschallsensor erkennt die Berührung zwischen Abrichtrolle 2 und Schleifschnecke 1, so dass die Maschinensteuerung automatisch die Schleifschnecke so positioniert, dass besagtes Eintauchen möglich ist.

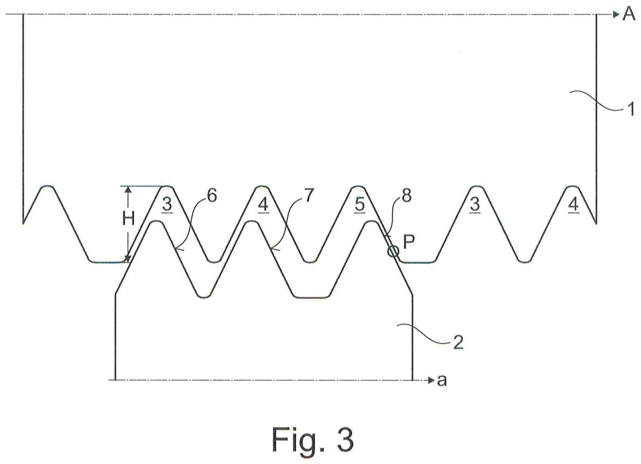

Bei stehender (nicht rotierender) Schleifschnecke 1 wird nun zunächst so vorgegangen, wie es in Figur 3 dargestellt ist: Die Abrichtrolle 2 wird (aus einer initialen Position, wie sie in Figur 2 dargestellt ist) radial relativ zur Schleifschnecke 1 zugestellt, bis sie mit ihren Abrichtflächen 6, 7, 8 in den Bereich der Schneckengänge 3, 4, 5 hineinreicht.

Das radiale Einfahren erfolgt also zunächst in der axialen Relativposition von Schleifschnecke 1 und Abrichtrolle 2, wie sie in Figur 2 dargestellt ist. Betreffend die radiale Zustellung der Abrichtrolle 2 relativ zur Schleifschnecke 1 ist zu sagen, dass ein hinreichendes Eintauchen der Abrichtflächen 6, 7, 8 in die Schneckengänge 3, 4, 5 gewährleistet sein muss. Diesbezüglich ist zu sagen, dass besagtes radiale Einfahren in einen Bereich erfolgt, der zwischen 10 % und 90 % der Höhe H (s. Figur 2) der Schneckengänge 3, 4, 5 entspricht, d. h. die Abrichtflächen 6, 7, 8 treten zuverlässig über den Kopfbereich der Schneckengänge 3, 4, 5 hinaus in die Schneckengänge ein, sind aber auch noch hinreichend vom Grund der Schneckengänge entfernt. Bevorzugt befinden sich die radial außenliegenden Enden der Abrichtflächen 6, 7, 8 etwa in der Mitte der Höhe H der Schneckengänge 3, 4, 5, wie es in Figur 3 zu sehen ist.

In dieser radialen Relativposition wird nun gemäß Figur 3 bei stehender Schleifschnecke die rotierende Abrichtrolle 2 axial (in Figur 3 nach rechts) relativ zur Schleifschnecke 1 verfahren, bis Kontaktnahme einer Abrichtfläche 6, 7, 8 mit einer ersten Flanke der Schleifschnecke 1 in einem Schneckengang 3, 4, 5 vorliegt. In Figur 3 ist dies mit dem Punkt P markiert. Besagte Relativstellung zwischen Schleifschnecke 1 und Abrichtrolle 2 wird von der Maschinensteuerung registriert.

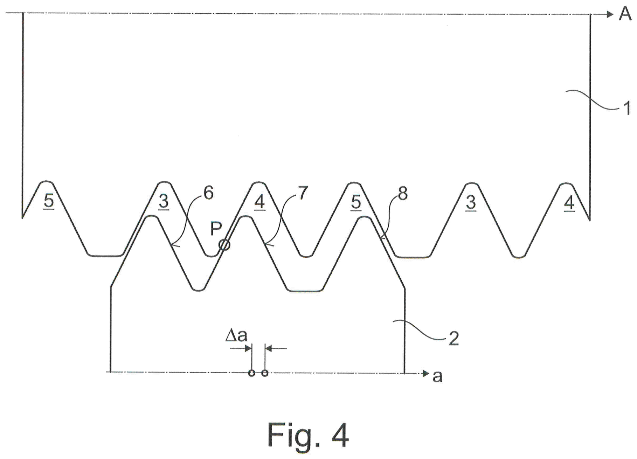

Anschließend wird - bei unveränderter radialer Position zwischen Schleifschnecke 1 und Abrichtrolle 2 - die Abrichtrolle (in Figur 3 nach links) verfahren, wie es in Figur 4 dargestellt ist, und zwar bis wiederum Kontaktnahme einer Abrichtfläche 6, 7, 8 mit einer der ersten Flanke (gemäß Figur 3 am Punkt P) gegenüberliegenden zweiten Flanke der Schleifschnecke 1 in einem Schneckengang 3, 4, 5 gegeben ist. In Figur 4 ist eingetragen, dass dies der Fall ist, wenn die Abrichtrolle 2 um einen axialen Verschiebebetrag von Δa verschoben wurde; Berührung liegt nunmehr am Punkt P gemäß Figur 4 vor. Wiederum wird die entsprechende axiale Relativstellung der Abrichtrolle 2 von der Maschinensteuerung registriert.

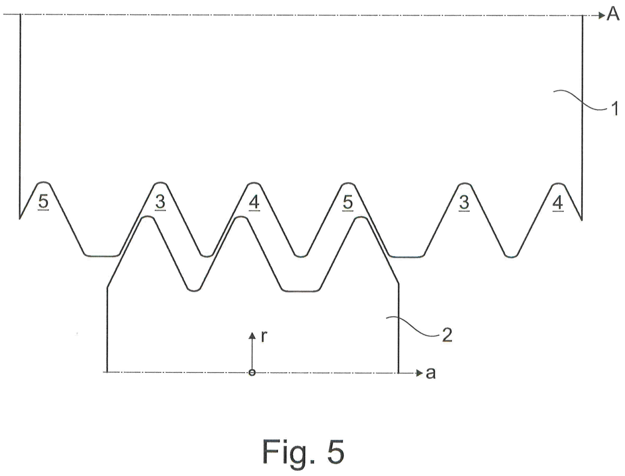

Diese ermittelt nun die axialen Mittenposition des Schneckengangs als (insbesondere arithmetisches) Mittel der ersten und der zweiten Relativposition gemäß den beiden Positionen, die in den Figuren 3 und 4 ermittelt wurden, d. h. den Wert von 0,5 x Δa. Es wird also eine Koordinate als Mittelergebnis zwischen den beiden axialen Kontaktpositionen nach dem Antasten der beiden Flanken gespeichert, die im Allgemeinen in zwei unterschiedlichen Schneckengängen auftraten. Um diesen Betrag wird die Abrichtrolle 2 zurückverfahren, um insofern zentriert zu den beiden ermittelten Positionen gemäß den Figuren 3 und 4 zu sein. Dies ist in Figur 5 dargestellt.

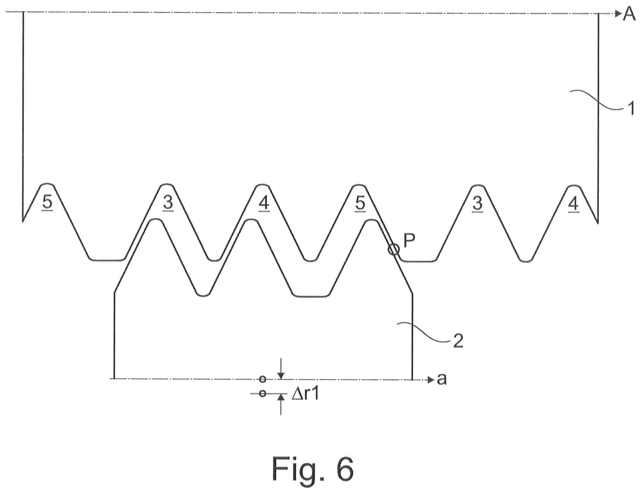

Nunmehr erfolgt das radiale Einfahren der Abrichtrolle 2 (in Figur 5 also in Richtung r) in die Schneckengänge 3, 4, 5, bis Kontaktnahme einer Abrichtfläche 6, 7, 8 mit der Schleifschnecke 1 detektiert wird. Dies ist in Figur 6 illustriert, wo zu sehen ist, dass Kontakt am Punkt P gegeben ist und hierfür die Abrichtrolle 2 um den radialen Zustellungsbetrag Δr1 eingefahren werden musste.

Die sich so ergebende radiale Relativposition zwischen der Werkzeugachse A und der Abrichtwerkzeugachse a wird in der Maschinensteuerung registriert und dort gespeichert.

Das beschriebene Verfahren gemäß den Figuren 3 bis 6 wird nun wiederholt, und zwar in der relativen Position zwischen Schleifschnecke 1 und Abrichtrolle 2, die um einen Schneckengang verschoben bzw. versetzt ist (s. die Nummerierung der Schneckengänge in den Figuren 3 bis 10, in die die Abrichtflächen 6, 7, 8 der Abrichtrolle eintauchen).

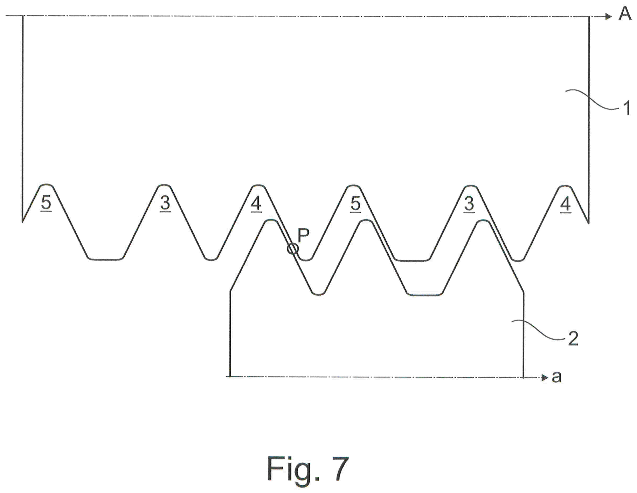

Insoweit zeigt Figur 7 zunächst die Situation, die Figur 3 entspricht, wobei nun Kontaktnahme am Punkt P vorliegt.

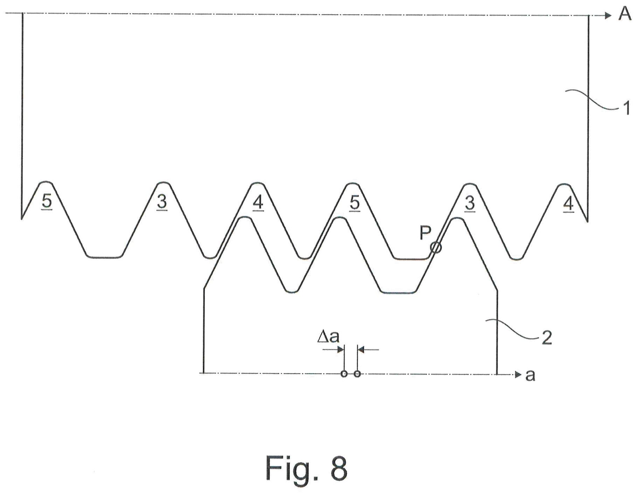

Anschließend wird gemäß Figur 8 die Abrichtrolle 2 (in Figur 7 nach links) verschoben, bis Kontaktnahme am Punkt P gemäß Figur 8 vorliegt. Hierfür war der Verschiebebetrag Δa für die Abrichtrolle 2 erforderlich.

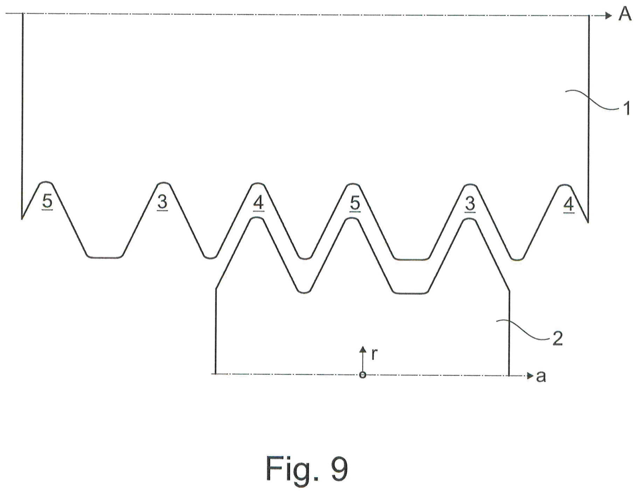

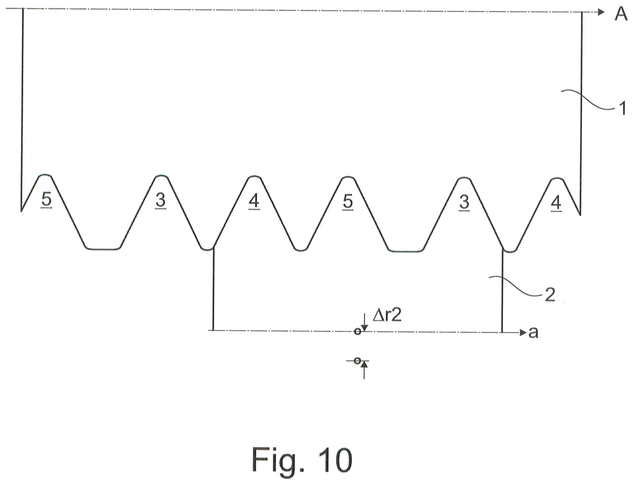

Gemäß Figur 9 wurde entsprechend Figur 5 wiederum die Abrichtrolle 2 zentriert zu den Schneckengängen positioniert (d. h. axiales Rückverschieben um 0,5 x Δa), um die Abrichtrolle 2 dann radial (in Richtung r gemäß Figur 9) auf die Schleifschnecke 1 zuzuschieben, bis Kontaktnahme zwischen Abrichtrolle und Schleifschnecke vorliegt. Dies ist in Figur 10 dargestellt, wo zu erkennen ist, dass hierfür der radiale Zustellungsbetrag von Δr2 erforderlich war. Auch dieser wird wiederum in der Maschinensteuerung gespeichert.

Das beschriebene Verfahren wird so oft wiederholt, wie es der Anzahl n der Abrichtflächen 6, 7, 8 entspricht, im Ausführungsbeispiel also drei Mal.

Die Maschinensteuerung registriert jeweils die radialen Zustellungsbeträge, Δr1, Δr2, etc. und ermittelt den hiervon größten Wert.

Für diesen gilt, dass er die "richtige" Relativposition zwischen Abrichtrolle und Schleifschnecke angibt, d. h. das Abrichtprofil der Abrichtrolle 2 "passt" zu den Schneckengängen der Schleifschnecke 1.

Mit der in diese richtige Position eingeschobene Abrichtrolle 2 wird dann die Schleifschnecke 1 abgerichtet.

Das beschriebene Verfahren kann analog angewendet werden, wenn die fertig abgerichtete Schleifschnecke 1 in Eingriff mit einem zu schleifenden Werkstück gebracht werden muss.

In beiden Fällen gilt, dass ein systematisches und automatisierbares Verfahren verfügbar ist, um den Abrichtvorgang bzw. Schleifvorgang zuverlässig vorbereiten zu können, bevor eine Profilierung der Schleifschnecke für das Schleifen einer inäquidistanten Verzahnung erfolgt bzw. das Schleifen einer solchen Verzahnung.

### Bezugszeichenliste:

- 1: Schleifschnecke
- 2: mehrrillige Abrichtrolle
- 3: Schneckengang
- 4: Schneckengang
- 5: Schneckengang
- 6: Abrichtfläche
- 7: Abrichtfläche
- 8: Abrichtfläche

- A: Werkzeugachse (Achse der Schleifschnecke)
- a: Abrichtwerkzeugachse
- DA: Außendurchmesser der Schleifschnecke
- da: Außendurchmesser der Abrichtrolle
- H: Höhe der Schneckengänge
- n: Anzahl der Abrichtflächen
- N: Anzahl der Schneckengänge

- d: Bezugsdurchmesser für die Zahndicke
- sn1: Zahndicke
- sn2: Zahndicke
- sn3: Zahndicke
- pn1: Teilung
- pn2: Teilung
- pn3: Teilung
- h: radiale Höhe
- α: Flankenwinkel

## Patentansprüche

1. Verfahren zum Abrichten einer mehrgängigen Schleifschnecke (1) mit einer mehrrilligen Abrichtrolle (2),
wobei die Schleifschnecke (1) mehrere Schneckengänge (3, 4, 5) aufweist, die um eine Werkzeugachse (A) herum parallel zueinander verlaufen,
wobei die Abrichtrolle (2) eine Anzahl (n) Abrichtflächen (6, 7, 8) aufweist, die entlang einer Abrichtwerkzeugachse (a) benachbart angeordnet sind und die im Radialschnitt zahnförmig ausgebildet sind,
wobei zum Abrichten der Schleifschnecke (1) die Abrichtrolle (2) in Eingriff mit den Schneckengängen (3, 4, 5) gebracht wird,
**dadurch gekennzeichnet,**
**dass** mindestens zwei der Abrichtflächen (6, 7, 8) entlang der Abrichtwerkzeugachse (a) der Abrichtrolle (2) ungleichmäßig voneinander beabstandet sind und/oder dass sich mindestens zwei der Abrichtflächen (6, 7, 8) im Radialschnitt in ihrer Form voneinander unterscheiden,
wobei das Abrichten der Schleifschnecke (1) mit der Abrichtrolle (2) die Schritte umfasst:
a) Ermittlung oder Feststellung des Außendurchmessers (DA, da) sowohl der Schleifschnecke (1) als auch der Abrichtrolle (2);
b) Bei stehender Schleifschnecke (1):
b1) radiales Einfahren der Abrichtflächen (6, 7, 8) der Abrichtrolle (2) in die Schneckengänge (3, 4, 5) in einer ersten axialen Relativposition zwischen Werkzeugachse (A) und Abrichtwerkzeugachse (a), wobei das Einfahren so erfolgt, dass die Abrichtflächen (6, 7, 8) bis in einen Bereich zwischen 10 % und 90 % der Höhe (H) der Schneckengänge (3, 4, 5) reichen;
bla) Ermittlung einer ersten axialen Relativposition zwischen Schleifschnecke (1) und Abrichtrolle (2) bei Kontaktnahme einer Abrichtfläche (6, 7, 8) mit einer ersten Flanke der Schleifschnecke (1) in einem Schneckengang;
blb) Ermittlung einer zweiten axialen Relativposition zwischen Schleifschnecke (1) und Abrichtrolle (2) bei Kontaktnahme einer Abrichtfläche (6, 7, 8) mit einer der ersten Flanke gegenüberliegenden zweiten Flanke der Schleifschnecke (1) in einem Schneckengang;
b1c) Ermittlung einer axialen Mittenposition zwischen der ersten und der zweiten axialen Relativposition gemäß Schritt b1a) und b1b);
b1d) Positionieren der Abrichtrolle (2) relativ zur Schleifschnecke (1) in der ermittelten axialen Mittenposition des Schneckengangs und weiteres radiales Einfahren der Abrichtrolle (2) in die Schneckengänge (3, 4, 5), bis Kontaktnahme einer Abrichtfläche (6, 7, 8) mit der Schleifschnecke (1) detektiert wird;
b1e) Speichern der gemäß Schritt b1d) ermittelten radialen Position zwischen Abrichtrolle (2) und Schleifschnecke (1) bei Kontaktaufnahme gemäß Schritt b1d);
b2) Wiederholen des Schritts b1) durch radiales Einfahren der Abrichtrolle (2) in weitere Schneckengänge (3, 4, 5), wobei das Einfahren in Richtung der Werkzeugachse (A) um einen Schneckengang versetzt erfolgt, wobei die Anzahl der Wiederholungen der Anzahl (n) Abrichtflächen (6, 7, 8) minus 1 entspricht;
c) Abrichten der Schleifschnecke (1) mit der Abrichtrolle (2), wobei die Abrichtrolle (2) in derjenigen relativen axialen Mittenposition gemäß Schritt b1c) zwischen Schleifschnecke (1) und Abrichtrolle (2) eingefahren wird, bei der sich die tiefste radiale Position zwischen Schleifschnecke (1) und Abrichtrolle (2) gemäß Schritt b1e) ergeben hat.

2. Verfahren nach Anspruch 1, **dadurch gekennzeichnet, dass** die Ermittlung des Außendurchmessers (DA, da) der Schleifschnecke (1) und/oder der Abrichtrolle (2) gemäß Schritt a) von Anspruch 1 durch Antasten des Außenumfangs der Schleifschnecke (1) und/oder der Abrichtrolle (2) mittels eines Messelements erfolgt, insbesondere mittels eines Körperschallsensors.

3. Verfahren nach Anspruch 1 oder 2, **dadurch gekennzeichnet, dass** beim Wiederholen des Schritts b1) gemäß Schritt b2) von Anspruch 1 unterschiedliche Umfangsbereiche und/oder axiale Bereiche der Schleifschnecke (1) verwendet werden.

4. Verfahren nach einem der Ansprüche 1 bis 3, **dadurch gekennzeichnet, dass** bei der Ermittlung der ersten und der zweiten axialen Relativposition zwischen Schleifschnecke (1) und Abrichtrolle (2) gemäß Schritt b1a) und b1b) von Anspruch 1 die Werkzeugachse (A) und die Abrichtwerkzeugachse (a) relativ zueinander axial verschoben werden.

5. Verfahren nach einem der Ansprüche 1 bis 3, **dadurch gekennzeichnet, dass** bei der Ermittlung der ersten und der zweiten axialen Relativposition zwischen Schleifschnecke (1) und Abrichtrolle (2) gemäß Schritt b1a) und b1b) von Anspruch 1 die Werkzeugachse (A) und die Abrichtwerkzeugachse (a) relativ zueinander ortsfest verbleiben und die Schleifschnecke (1) um die Werkzeugachse (A) gedreht wird, wobei der Wert der axialen Verschiebung aus dem Drehwinkel der Schleifschnecke und der Steigung der Schneckengänge ermittelt wird.

6. Verfahren nach einem der Ansprüche 1 bis 5, **dadurch gekennzeichnet, dass** bei der Durchführung von Schritt b) von Anspruch 1 die Abrichtrolle (2) rotiert.

7. Verfahren nach einem der Ansprüche 1 bis 6, **dadurch gekennzeichnet, dass** die Ermittlung der Kontaktnahme gemäß den Schritten b1a), b1b) und b1d) von Anspruch 1 durch Antasten mittels eines Messelements erfolgt, insbesondere mittels eines Körperschallsensors.

8. Verfahren zum Schleifen eines Zahnrads mittels einer mehrgängigen Schleifschnecke, wobei die Schleifschnecke (1) eine Anzahl (N) an Schneckengängen (3, 4, 5) aufweist, die um eine Werkzeugachse (A) herum parallel zueinander verlaufen, wobei das Zahnrad Zähne aufweist, die entlang des Umfangs des Zahnrads ungleichmäßig voneinander beabstandet sind und/oder sich in ihrer Form voneinander unterscheiden,
**dadurch gekennzeichnet,**
**dass** korrespondierend zu den Zähnen des Zahnrads mindestens zwei der Schneckengänge (3, 4, 5) entlang der Werkzeugachse (A) ungleichmäßig voneinander beabstandet sind und/oder dass sich mindestens zwei der Schneckengänge (3, 4, 5) im Radialschnitt in ihrer Form voneinander unterscheiden,
wobei das Schleifen des Zahnrads mit der Schleifschnecke (1) die Schritte umfasst:
a) Ermittlung des Außendurchmessers (DA) sowohl der Schleifschnecke (1) als auch des zu schleifenden Zahnrads;
b) Bei sich drehender Schleifschnecke und sich korrespondierend drehendem Zahnrad:
b1) radiales Einfahren der Schneckengänge (3, 4, 5) der Schleifschnecke (1) in die Verzahnung des Zahnrads in einer ersten axialen Relativposition zwischen den Achsen von Zahnrad und Schleifschnecke (1), wobei das Einfahren so erfolgt, dass die Schneckengänge (3, 4, 5) bis in einen Bereich zwischen 10 % und 90 % der Zahnhöhe der Verzahnung reichen;
b1a) Ermittlung einer ersten axialen Relativposition zwischen den Achsen von Zahnrad und Schleifschnecke (1) bei Kontaktnahme eines Schneckengangs (3, 4, 5) mit einer ersten Flanke eines Zahns der Verzahnung;
b1b) Ermittlung einer zweiten axialen Relativposition zwischen den Achsen von Zahnrad und Schleifschnecke (1) bei Kontaktnahme eines Schneckengangs (3, 4, 5) mit einer der ersten Flanke gegenüberliegenden zweiten Flanke eines Zahns der Verzahnung;
b1c) Ermittlung einer axialen Mittenposition der Zahnlücke zwischen der ersten und der zweiten axialen Relativposition gemäß Schritt b1a) und b1b);
b1d) Positionieren der Schleifschnecke (1) relativ zum Zahnrad in der ermittelten axialen Mittenposition der Zahnlücke und weiteres radiales Einfahren der Schleifschnecke (1) in die Verzahnung des Zahnrads, bis Kontaktnahme eines Schneckengangs (3, 4, 5) mit dem Zahnrad detektiert wird;
b1e) Speichern der gemäß Schritt b1d) ermittelten radialen Position zwischen Schleifschnecke (1) und Zahnrad bei Kontaktaufnahme gemäß Schritt b1d);
b2) Wiederholen des Schritts b1) durch radiales Einfahren der Schleifschnecke (1) in weitere Zahnlücken der Verzahnung, wobei das Einfahren in Umfangsrichtung der Verzahnung um einen Zahn versetzt erfolgt, wobei die Anzahl der Wiederholungen der Anzahl (N) Schneckengänge (3, 4, 5) minus 1 entspricht;
c) Schleifen der Verzahnung des Zahnrads mit der Schleifschnecke (1), wobei die Schleifschnecke (1) in derjenigen relativen axialen Position zwischen Zahnrad und Schleifschnecke (1) eingefahren wird, bei der sich die tiefste radiale Position zwischen Zahnrad und Schleifschnecke (1) gemäß Schritt b1e) ergeben hat.

9. Verfahren nach Anspruch 8, **dadurch gekennzeichnet, dass** die Ermittlung des Außendurchmessers (DA) der Schleifschnecke (1) und/oder des Zahnrads gemäß Schritt a) von Anspruch 8 durch Antasten des Außenumfangs der Schleifschnecke (1) und/oder des Zahnrads mittels eines Messelements erfolgt, insbesondere mittels eines Körperschallsensors.

10. Verfahren nach Anspruch 8 oder 9, **dadurch gekennzeichnet, dass** beim Wiederholen des Schritts b1) gemäß Schritt b2) von Anspruch 8 unterschiedliche Umfangsbereiche und/oder axiale Bereiche der Verzahnung verwendet werden.

11. Verfahren nach einem der Ansprüche 8 bis 10, **dadurch gekennzeichnet, dass** bei der Ermittlung der ersten und der zweiten axialen Relativposition zwischen Schleifschnecke (1) und Verzahnung des Zahnrads gemäß Schritt b1a) und b1b) von Anspruch 8 die Werkzeugachse (A) relativ zum Zahnrad axial verschoben werden.

12. Verfahren nach einem der Ansprüche 8 bis 11, **dadurch gekennzeichnet, dass** bei der Ermittlung der ersten und der zweiten axialen Relativposition zwischen Zahnrad und Schleifschnecke (1) gemäß Schritt b1a) und b1b) von Anspruch 8 die Werkzeugachse (A) und die Achse des Zahnrads relativ zueinander ortsfest verbleiben und die Schleifschnecke (1) mit einer Zusatzdrehung beaufschlagt wird, wobei der Wert der axialen Verschiebung aus dem Drehwinkel der Schleifschnecke und der Steigung der Schneckengänge ermittelt wird.

13. Verfahren nach einem der Ansprüche 8 bis 12, **dadurch gekennzeichnet, dass** die Ermittlung der Kontaktnahme gemäß den Schritten b1a), b1b) und b1d) von Anspruch 8 durch Antasten mittels eines Messelements erfolgt, insbesondere mittels eines Körperschallsensors.

14. Verfahren nach einem der Ansprüche 8 bis 12, **dadurch gekennzeichnet, dass** zum Schleifen eines weiteren, neuen Zahnrads mit der Schleifschnecke (1) die Schritte durchgeführt werden:
a) Ermittlung oder Feststellung der Lage der Schneckengänge (3, 4, 5) über der Werkzeugachse (A);
b) vor dem Einfahren der Schleifschnecke in die zu schleifende Verzahnung: Ermittlung der Lage der Zähne und/oder der Zahnlücken des Zahnrads über den Umfang des Zahnrads;
c) Auswerten der ermittelten Lage der Zähne und/oder der Zahnlücken gemäß Schritt b) und Bestimmung sich wiederholender Abstandsmuster über den Umfang des Zahnrads;
d) Einfahren der Schleifschnecke in die zu schleifende Verzahnung, wobei die in Schritt a) ermittelte Lage der Schneckengänge (3, 4, 5) mit der Lage der Zähne und/oder der Zahnlücken des Zahnrads bezüglich des gemäß Schritt c) bestimmten sich wiederholenden Abstandsmusters abgeglichen wird.

15. Verfahren nach Anspruch 14, **dadurch gekennzeichnet, dass** beim Einfahren der Schleifschnecke in die zu schleifende Verzahnung gemäß Schritt d) von Anspruch 14 eine Aufmaßvermittlung anhand der in Schritt b) von Anspruch 14 ermittelten Lage der Zähne und/oder der Zahnlücken des Zahnrads durchgeführt wird, wobei bevorzugt die Ermittlung der Lage der Zähne und/oder der Zahnlücken des Zahnrads gemäß Schritt b) von Anspruch 14 mittels eines berührungslosen Sensors erfolgt, insbesondere mit einem induktiv oder kapazitiv arbeitenden Sensor.
